# EUROPÄISCHE PATENTSCHRIFT

(11) **EP 0 904 619 B1**
(45) Veröffentlichungstag und Bekanntmachung des Hinweises auf die Patenterteilung: **17.10.2001**
(21) Anmeldenummer: 97926992.5
(22) Anmeldetag: 09.06.1997
(51) Int. Cl.: H02J 1/00

(54) **SCHALTUNGSANORDNUNG ZUR SPANNUNGSUMPOLUNG**
CIRCUITRY FOR VOLTAGE POLE REVERSAL
CIRCUIT POUR INVERSER LA POLARITE D'UNE TENSION

(30) Priorität: 14.06.1996 DE 19623828
(43) Veröffentlichungstag der Anmeldung: 31.03.1999
(73) Patentinhaber: Infineon Technologies AG, 81669 München (DE)
(72) Erfinder: MEIER, Thomas, D-80992 München (DE); SCHÖPF, Klaus-Jürgen, D-85737 Ismaning (DE)
(74) Vertreter: Zedlitz, Peter, Dipl.-Inf.
(86) Internationale Anmeldenummer: DE9701157
(87) Internationale Veröffentlichungsnummer: WO9748160

(56) Entgegenhaltungen:
- US-A- 3 863 138
- US-A- 4 922 401

## Beschreibung

Die Erfindung bezieht sich auf eine Schaltungsanordnung zum Erzeugen einer gegenüber einer Betriebsspannung umgepolten Ausgangsspannung. Sie bezieht sich insgesondere auf eine Schaltungsanordnung, die besonders stromsparend arbeitet.

Sie bezieht sich insbesondere auf eine Schaltungsanordnung, die in einem mit einer Batteriespannung versorgten elektronischen Gerät, beispielsweise in einem Mobilfunkgerät (Mobiltelefon) oder einem tragbaren Computer (Laptop), aus einer positiven Spannung eine negative Spannung erzeugt.

Derartige Schaltungsanordnungen sind bekannt. Sie werden z. B. bei batteriespannungsversorgten Mobilfunkgeräten, die im allgemeinen einen oder mehrere MMIC (Monolithic Microwave Integrated Circuit)-Chips (z. B. einen MMIC-Leistungsverstärker) auf MESFET-Basis aufweisen, dazu verwendet, eine negative Gate-Vorspannung für den bzw. die MESFETs zu erzeugen. Bei einer ersten Schaltungsvariante, mit der eine negative Spannung in einem batteriebetriebenen elektronischen Gerät erzeugt werden kann, wird mittels eines Oszillators oder Multivibrators eine Wechselspannung erzeugt und nachfolgend gleichgerichtet. Ebenso ist es bei Mobiltelefonen möglich, durch Gleichrichtung eines am Eingang eines MMIC-Leistungsverstärkers anliegenden empfangenen Hochfrequenzsignals eine negative Spannung zu erzeugen.

Diese beiden Methoden weisen jedoch Nachteile auf. So wird bei der erstgenannten Möglichkeit durch den Oszillator im elektronischen Gerät ein zusätzliches Wechselspannungssignal erzeugt, das die Betriebseigenschaften des Gerätes beeinträchtigen kann. Es können beispielsweise benachbarte Bauelemente des elektronischen Geräts wie beispielsweise Mikroprozessoren beeinflußt werden, was zu Fehlfunktionen führen kann.

Bei der zweitgenannten Methode wirkt sich besonders nachteilig aus, daß der MMIC-Leistungsverstärker erst nach Anliegen des Hochfrequenzsignals eingeschaltet wird und nur bei relativ hohen Signalpegeln funktionsfähig ist.

Der vorliegenden Erfindung liegt daher die Aufgabe zugrunde, eine störungsarme Schaltungsanordnung der eingangs genannten Art zu entwickeln, durch die eine Beeinträchtigung der Betriebseigenschaften eines elektronischen Gerätes verringert sind und die gleichzeitig kostengünstig und platzsparend realisiert werden kann. Gleichzeitig soll diese Schaltungsanordnung unter Vermeidung der oben genannten Nachteile, insbesondere zum Einsatz in einem Mobilfunkgerät geeignet sein und besonders stromsparend arbeiten.

Diese Aufgabe wird durch eine Schaltungsanordnung mit den Merkmalen des Anspruches 1 gelöst. Vorteilhafte Weiterbildungen der erfindungsgemäßen Schaltungsanordnungen sind Gegenstand der Unteransprüche 2 bis 10. Eine bevorzugte Anwendung der erfindungsgemäßen Schaltungsanordnungen ist im Unteranspruch 10 angegeben.

Die erfindungsgemäße Schaltungsanordnung weist folgende Merkmale auf:
Zwischen einen ersten Anschluß einer Laststrecke eines Transistors, insbesondere einer Source-Drain-Strecke eines Feldeffekttransistors, und einen ersten Schaltungseingangsanschluß ist eine Spule gekoppelt und ein zweiter Anschluß der Laststrecke des Transistors ist mit einem festen Bezugspotential elektrisch leitend verbunden. An den ersten Schaltungseingangsanschluß ist eine Betriebsspannung mit einer gegenüber dem Bezugspotential zweiten Polarität (z. B. positiv) anlegbar. Weiterhin ist ein Steueranschluß des Transistors über eine Steuerleitung an einen zweiten Schaltungseingangsanschluß gekoppelt, an den eine Wechselspannung anlegbar ist. Zwischen den ersten Anschluß der Laststrecke des Transistors und eine Kathode einer ersten Diode ist ein erster Kondensator gekoppelt und die Kathode der ersten Diode ist an eine Anode einer zweiten Diode gekoppelt. Eine Kathode der zweiten Diode ist an das feste Bezugspotential gekoppelt, während zwischen das feste Bezugspotential und eine Anode der ersten Diode ein zweiter Kondensator gekoppelt ist. Die Anode der ersten Diode ist mit einem Schaltungsausgangsanschluß verbunden, an dem eine Ausgangsspannung mit einer gegenüber dem festen Bezugspotential ersten Polarität (z. B. negativ) abgreifbar ist.

Die erfindungsgemäße Schaltungsanordnung arbeitet nach dem grundsätzlichen Funktionsprinzip, daß mittels einer Spannungsüberhöhung an der Spule nach einem Sperrendschalten des Transistors der erste Kondensator auf eine gegenüber dem festen Bezugspotential positive Spannung aufgeladen wird. Während einer Ein-Phase des Transistors lädt der erste Kondensator dann den zweiten Kondensator auf eine gegenüber dem festen Bezugspotential negative Spannung auf, die von außen abgreifbar ist.

Die Wechselspannung besteht beispielsweise aus Spannungsimpulsen mit einer gegenüber dem festen Bezugspotential zweiten Polarität, insbesondere aus einer Rechteckspannung.

Die erfindungsgemäße Schaltungsanordnung hat den besonderen Vorteil, daß Sie im Vergleich zum Stand der Technik ohne großen Bauteileaufwand und daher mit geringem Platzaufwand realisierbar ist. Bis auf die Spule und die Kondensatoren können alle Komponenten auf einfache Weise auf einem MMIC-Chip integriert werden.

In einem Mobilfunkgerät wird bevorzugt als Wechselspannung für die Transistorsteuerung die bereits vorhandene Rufsignalgeber-Versorgungsspannung genutzt. Analog kann in einem Laptop die Lautsprecherspannung genutzt werden.

Für den Betrieb der erfindungsgemäßen Schaltungsanordnung ist daher kein zusätzlicher Oszillator notwendig. Die Betriebsspannung und die Wechselspannung stehen in elektronischen Geräten meist bereits zur Verfügung und müssen nicht eigens für die Schaltungsanordnung erzeugt werden

Bei einer bevorzugten Ausführungsform der erfindungsgemäßen Schaltungsanordnung ist als Wechselspannung eine Rechteckspannung verwendet. Dadurch können an der Spule vorteilhafterweise sehr hohe Spannungsüberhöhungen erzeugt werden, wodurch die Effizienz der Schaltungsanordnung verbessert ist.

Bei einer besonders bevorzugten Weiterbildung der erfindungsgemäßen Schaltungsanordnung ist zwischen dem Schaltungsausgangsanschluß und der Steuerleitung des Transistors ein elektrischer Widerstand angeschlossen, über den der Steueranschluß des Transistors T mit einer negativen Spannung versorgt ist und damit vorteilhafterweise besonders stromsparend arbeitet.

Desweiteren ist bei einer bevorzugten Ausführungsform der Erfindung in die Steueranschlußleitung (Verbindung zwischen dem zweiten Schaltungseingangsanschluß und dem Steueranschluß) des Transistors ein Strombegrenzungswiderstand geschaltet, der verhindert, daß die Wechselspannung im Betrieb stark zusammenbricht.

Darüberhinaus kann in die Steuerleitung vorteilhafterweise ein dritter Kondensator geschaltet sein, der eine die Wechselspannung erzeugende Spannungsquelle gleichstrommäßig von der Schaltungsanordnung entkoppelt.

Bei einer weiteren vorteilhaften Weiterbildung der erfindungsgemäßen Schaltungsanordnung ist zwischen den ersten Schaltungseingangsanschluß und das feste Bezugspotential ein vierter Kondensator gekoppelt. Dadurch wird erreicht, daß eine die positive Betriebsspannung liefernde Spannungsquelle wechselstrommäßig von der Schaltung entkoppelt ist.

Darüberhinaus kann auch zwischen dem zweiten Schaltungseingangsanschluß bzw. dem dritten Kondensator und dem festen Bezugspotential ein zusätzlicher elektrischer Widerstand angeschlossen sein. Dieser bewirkt vorteilhafterweise eine Stabilisierung des Potentials am Steueranschluß des Transistors gegenüber dem festen Bezugspotential.

Als Transistor kann vorteilhafterweise sowohl ein Feldeffekttransistor als auch ein Bipolartransistor verwendet sein.

Weitere Vorteile der Erfindung ergeben sich aus den Unteransprüchen und aus den im folgenden beschriebenen Ausführungsbeispielen in Verbindung mit den Figuren 1 bis 6. Es zeigen:
Figur 1 ein Schaltbild eines ersten Ausführungsbeispieles einer erfindungsgemäßen Schaltungsanordnung,
Figur 2 eine schematische Darstellung eines Spannungs-Zeit-Diagramms einer Wechselspannung zur Steuerung des Transistors,
Figur 3 eine schematische Darstellung eines Spannungs-Zeit-Diagramms des Spannungsverlaufs an dem in Figur 1 mit I markierten Knoten der Schaltungsanordnung von Figur 1,
Figur 4 eine schematische Darstellung eines Spannungs-Zeit-Diagramms des Spannungsverlauf an dem in Figur 1 mit K markierten Knoten der Schaltungsanordnung von Figur 1,
Figur 5 ein Blockdiagramm der erfindungsgemäßen Schaltungsanordnung in Verbindung mit einem MMIC-Leistungsverstärker.

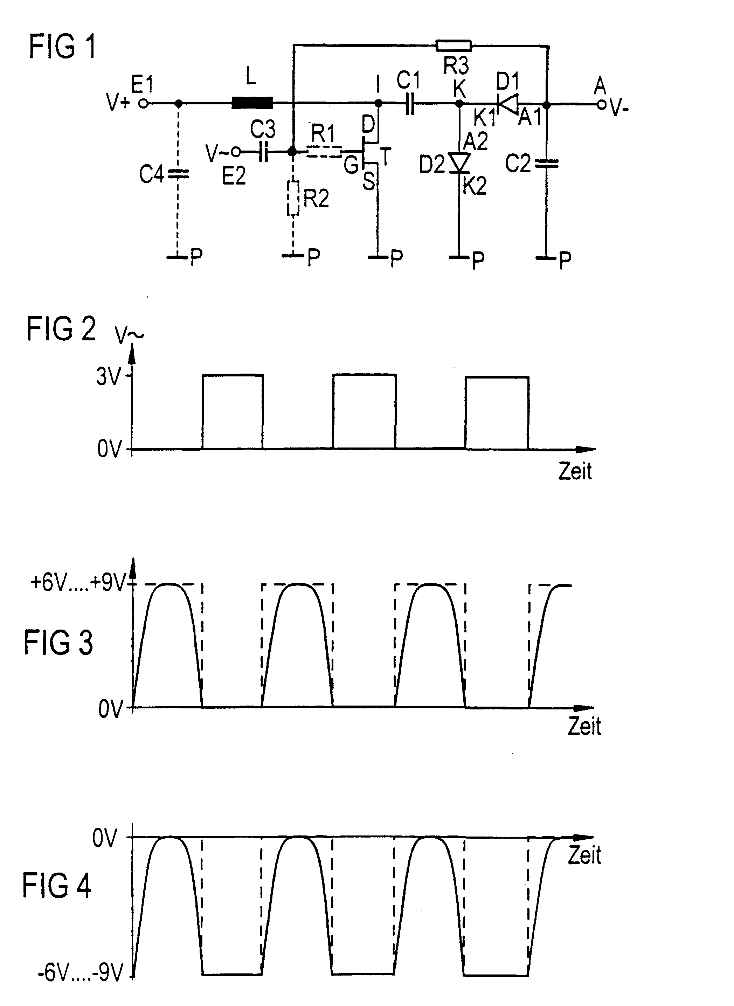

Bei der Schaltungsanordnung von Figur 1 ist ein Transistor T beispielsweise als Feldeffekttransistor realisiert. Zwischen einem Drainanschluß D (entspricht dem o. g. ersten Anschluß der Laststrecke) des Transistors T und einem ersten Schaltungseingangsanschluß E1, an dem eine positive Betriebsspannung V+ (z. B. +3V) anliegt, ist eine Spule L (z. B. mit einer Induktivität von 10*µ*H) angeschlossen. Ein Sourceanschluß S (entspricht dem o. g. zweiten Anschluß der Laststrecke) des Transistors T ist mit einem festen Bezugspotential P (z. B. Masse) und ein Gateanschluß G (entspricht dem o. g. Steueranschluß) des Transistors T ist mit einem zweiten Schaltungseingangsanschluß E2 verbunden, an dem eine Wechselspannung V~ (z. B. eine Rechteckspannung mit Rechteckimpulsen von +3V, man vgl. Figur 2) anliegt. Zwischen dem Drainanschluß D und einer Kathode K1 einer ersten Diode D1 ist ein erster Kondensator C1 (z. B. mit einer Kapazität von etwa 1nF) angeschlossen. Gleichzeitig ist die Kathode K1 der ersten Diode D1 mit einer Anode A2 einer zweiten Diode D2 und eine Kathode K2 der zweiten Diode D2 mit dem festen Bezugspotential P verbunden. Zwischen dem festen Bezugspotential P und einer Anode A1 der ersten Diode D1 ist ein zweiter Kondensator C2 (z. B. mit einer Kapazität von etwa 1nF) angeschlossen. Die Anode A1 der ersten Diode D1 ist mit einem Schaltungsausgangsanschluß A verbunden, an dem eine negative Spannung V- (bei den angegebenen Induktivitäts- und Kabazitätswerten ca. -6 bis -9V) abgreifbar ist.

Optional kann bei der Schaltungsanordnung von Figur 1 in die Gatezuleitung (Verbindung zwischen dem Gateanschluß G und dem zweiten Schaltungseingangsanschluß E2) ein Gatevorwiderstand R1 (Strombegrenzungswiderstand) mit beispielsweise R = 1 kΩ geschaltet sein (in Figur 1 gestrichelt eingezeichnet). Dieser verhindert ggf. ein starkes Zusammenbrechen der Wechselspannung V~.

Desweiteren kann zwischen das feste Bezugspotential P und den zweiten Schaltungseingangsanschluß E2 ein zusätzlicher elektrischer Widerstand R2 (z. B. R = 20 kΩ) gekoppelt sein (in Figur 1 gestrichelt eingezeichnet), der eine Stabilisierung des Gate(G)-Source(S)-Potentials des Transistors T bewirkt.

Zum gleichstrommäßigen Entkoppeln der Wechselspannungs(V~)-Versorgung von der Schaltungsanordnung kann zwischen dem zweiten Schaltungseingangsanschluß E2 und dem Gateanschluß G bzw. dem Gatevorwiderstand R1 ein dritter Kondensator C3 (in Fig. 1 ebenfalls gestrichelt eingezeichnet) mit einer Kapazität von beispielsweise 1 nF angeschlossen sein.

Weiterhin kann zum Entkoppeln der Spule L von einer Betriebsspannungs(V+)-Versorgung zwischen dem ersten Schaltungseingangsanschluß E1 und dem festen Bezugspotential P ein vierter Kondensator C4 (in Fig. 1 wiederum gestrichelt eingezeichnet) mit einer Kapazität von beispielsweise 2 nF angeschlossen sein.

Zur Versorgung des Transistors T mit einer negativen Gatespannung ist zwischen dem Schaltungsausgangsanschluß A und dem Gateanschluß G bzw. dem Gatevorwiderstand R1 ein elektrischer Widerstand R3 angeschlossen Dadurch wird ein besonders stromsparender Betrieb der Schaltungsanordnung erzielt.

In Figur 2 ist ein Spannungs-Zeit-Diagramm für eine Wechselspannung V~ dargestellt, wie sie zur Ansteuerung des Transistors T verwendet werden kann und beispielsweise in einem Mobilfunkgerät (z. B. Mobiltelefon) als Rufsignalgeber-Versorgungsspannung V_{clk} zur Verfügung steht. Auf der Abszisse ist die Zeit und auf der Ordinate ist eine Spannung V aufgetragen. Diese ist eine Rechteckspannung mit einer Impulshöhe von beispielsweise +3V gegenüber dem festen Bezugspotential P (z. B. Masse) und einer Frequenz von z. B. zwischen 5 und 15 Mhz und liegt am zweiten Schaltungseingangsanschluß E2 an.

Das in Figur 3 dargestellte Spannungs-Zeit-Diagramm stellt schematisch den Spannungsverlauf an dem mit I bezeichneten Knoten der in Figur 1 dargestellten Schaltungsanordnung dar. Auf der Abszisse ist analog zu Figur 2 die Zeit und auf der Ordinate eine Spannung V aufgetragen. Demgemäß liegt am Knoten I innerhalb den Impulspausen der Wechselspannung V~ bzw. der Rufsignalgeber-Versorgungsspannung V_{clk} eine gegen das Bezugspotential P im Vergleich zur Betriebsspannung V+ erhöhte Spannung mit einem Maximum von etwa +6 bis +9V an. Während der Impulse liegt der Knoten I aufgrund des durchgeschalteten Transistors T auf dem festen Bezugspotential P. Die im Vergleich zur Betriebsspannung V+ erhöhte Spannung wird von einer beim Stromlosschalten der Spule L auftretenden Spannungsüberhöhung bewirkt, die den ersten Kondensator C1 auflädt. Der ideale Spannungsverlauf ist in Figur 3 gestrichelt eingezeichnet.

Das in Figur 4 dargestellte Spannungs-Zeit-Diagramm stellt schematisch den Spannungsverlauf an dem in Figur 1 mit K bezeichneten Knoten dar. Auf der Abszisse ist wiederum analog zu Figur 2 die Zeit und auf der Ordinate eine Spannung V aufgetragen. Innerhalb der Impulspausen der Wechselspannung V~ bzw. der Rufsignalgeber-Versorgungsspannung V_{clk} liegt hier gegenüber dem festen Bezugspotential eine Spannung mit einem Maximum von etwa -6 bis -9V an. Diese wird dadurch erzeugt, daß bei durchgeschaltetem Transistor T und damit auf das feste Bezugspotential geschaltetem positivem Pol des ersten Kondensators C1, der zweite Kondensator C2 auf eine gegenüber dem festen Bezugspotential negative Spannung V- geladen wird. Der ideale Spannungsverlauf ist in Figur 3 wiederum gestrichelt eingezeichnet.

Am Schaltungsausgangsanschluß A ist im unbelasteten Zustand eine reine Gleichspannung von etwa -6 bis -9 V abgreifbar.

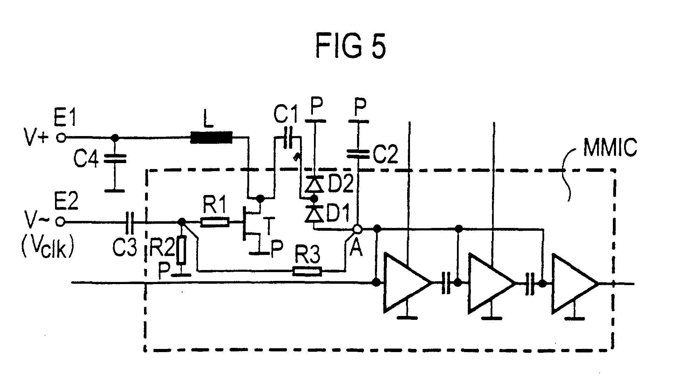

Bei dem in Figur 5 dargestellten Blockdiagramm der erfindungsgemäßen Schaltungsanordnung in Verbindung mit einem beispielsweise in einem Mobilfunkgerät einsetzbaren MMIC-Leistungsverstärkerchip MMIC mit drei Verstärkerstufen V1, V2, V3 ist zu erkennen, daß der Transistor T, die Dioden D1 und D2 und ggf. der erste, der zweite und/oder der dritte elektrische Widerstand R1, R2, R3 auf dem MMIC-Leistungsverstärkerchip MMIC integriert sind. Die Spule L, der erste und der zweite Kondensator C1,C2 sowie ggf. der dritte und der vierte Kondensator C3,C4 sind außerhalb des MMIC-Leistungsverstärkerchips MMIC angeordnet. In diesem Blockdiagramm ist weiterhin erkennbar, daß bei der erfindungsgemäßen Schaltungsanordnung als Wechselspannung V~ vorteilhafterweise die in einem Mobilfunkgerät grundsätzlich vorhandene Rufsignalgeber-Versorgungsspannung V_{clk} verwendbar ist.

## Patentansprüche

1. Schaltungsanordnung zum Erzeugen einer Ausgangsspannung (V-) mit einer gegenüber einem Bezugspotenial (P) ersten Polarität in einem mit einer Betriebsspannung (V+) mit einer gegenüber dem Bezugspotenial (P) zweiten Polarität versorgten elektronischen Gerät, bei der:
a) zwischen einen ersten Anschluß (D) einer Laststrecke eines Transistors (T) und einen ersten Schaltungseingangsanschluß (E1) eine Spule (L) gekoppelt ist,
b) ein zweiter Anschluß (S) der Laststrecke des Transistors (T) an ein festes Bezugspotential (P) gekoppelt ist,
c) an den ersten Schaltungseingangsanschluß (E1) die Betriebsspannung (V+) anlegbar ist,
d) ein Steueranschluß (G) des Transistors (T) an einen zweiten Schaltungseingangsanschluß (E2)gekoppelt ist, an den eine Wechselspannung (V~) anlegbar ist,
e) zwischen den ersten Anschluß (D) der Laststrecke des Transistors (T) und eine Kathode (K1) einer ersten Diode (D1) ein erster Kondensator (C1) gekoppelt ist,
f) die Kathode (K1) der ersten Diode (D1) an eine Anode (A2) einer zweiten Diode (D2) gekoppelt ist,
g) eine Kathode (K2) der zweiten Diode (D2) an das feste Bezugspotential (P) gekoppelt ist,
h) zwischen das feste Bezugspotential (P) und eine Anode (A1) der ersten Diode (D1) ein zweiter Kondensator (C2) gekoppelt ist und
h) die Anode (A1) der ersten Diode (D1) mit einem Schaltungsausgangsanschluß (A) mit der Ausgangsspannung (V-) verbunden ist.

2. Schaltungsanordnung nach Anspruch 1, bei der zwischen den Schaltungsausgangsanschluß (A) und der Steuerleitung (E2-G) des Transistors (T) ein elektrischer Widerstand (R3) gekoppelt ist.

3. Schaltungsanordnung nach Anspruch 1 oder 2, bei der zwischen dem ersten Schaltungseingangsanschluß (E1) und dem festen Bezugspotential (P) ein dritter Kondensator (C3) angeschlossen ist.

4. Schaltungsanordnung nach einem der Ansprüche 1 bis 3, bei der vor dem Steueranschluß (G) des Transistors (T) ein Strombegrenzungswiderstand (R1) angeordnet ist.

5. Schaltungsanordnung nach einem der Ansprüche 1 bis 4, bei der zwischen dem zweiten Schaltungseingangsanschluß (E2) und dem festen Bezugspotential (P) ein weiterer elektrischer Widerstand (R2) angeschlossen ist.

6. Schaltungsanordnung nach einem der Ansprüche 1 bis 5, bei der der Transistor (T), die erste und die zweite Diode (D1, D2) auf einem einzigen MMIC-Chip (MMIC) integriert sind.

7. Schaltungsanordnung nach Anspruch 2 oder nach Anspruch 2 und einem der Ansprüche 3 bis 6,, bei der der Transistor (T), die erste und die zweite Diode (D1, D2) und der elektrische Widerstand (R3) auf einem einzigen MMIC-Chip (MMIC) integriert sind.

8. Schaltungsanordnung nach einem der Ansprüche 1 bis 7, bei der die Wechselspannung (V~) eine aus Spannungsimpulsen mit einer gegenüber dem Bezugspotential (P) zweiten Polarität bestehende Rechteckspannung ist.

9. Verwendung der Schaltungsanordnung nach einem der Ansprüche 1 bis 8 in einem Mobilfunkgerät, wobei als Wechselspannung (V~) eine im Mobilfunkgerät erzeugte Rufsignalgeber-Versorgungsspannung (V_{clk}) verwendet ist.

## Claims

1. Circuit arrangement for producing an output voltage (V-) with a first polarity with respect to a reference-earth potential (P) in an electronic device which is supplied with an operating voltage (V+) with a second polarity with respect to the reference-earth potential (P), in which:
a) a coil (L) is coupled between a first connection (D) of a load path of a transistor (T) and a first circuit input connection (E1),
b) a second connection (S) of the load path of the transistor (T) is coupled to a fixed reference-earth potential (P),
c) the operating voltage (V+) can be applied to the first circuit input connection (E1),
d) a control connection (G) of the transistor (T) is coupled to a second circuit input connection (E2) to which an AC voltage (V AC) can be applied,
e) a first capacitor (C1) is coupled between the first connection (D) of the load path of the transistor (T) and a cathode (K1) of a first diode (D1),
f) the cathode (K1) of the first diode (D1) is coupled to an anode (A2) of a second diode (D2),
g) a cathode (K2) of the second diode (D2) is coupled to the fixed reference-earth potential (P),
h) a second capacitor (C2) is coupled between the fixed reference-earth potential (P) and an anode (A1) of the first diode (D1), and
i) the anode (A1) of the first diode (D1) is connected to a circuit output connection (A) at the output voltage (V-).

2. Circuit arrangement according to Claim 1, in which an electrical resistor (R3) is coupled between the circuit output connection (A) and the control line (E2-G) of the transistor (T).

3. Circuit arrangement according to Claim 1 or 2, in which a third capacitor (C3) is connected between the first circuit input connection (E1) and the fixed reference-earth potential (P).

4. Circuit arrangement according to one of Claims 1 to 3, in which a current limiting resistor (R1) is arranged upstream of the control connection (G) of the transistor (T).

5. Circuit arrangement according to one of Claims 1 to 4, in which a further electrical resistor (R2) is connected between the second circuit input connection (E2) and the fixed reference-earth potential (P).

6. Circuit arrangement according to one of Claims 1 to 5, in which the transistor (T), the first diode (D1) and the second diode (D2) are integrated on a single MMIC chip (MMIC).

7. Circuit arrangement according to Claim 2 or according to Claim 2 and one of Claims 3 to 6, in which the transistor (T), the first diode (D1), the second diode (D2) and the electrical resistor (R3) are integrated on a single MMIC chip (MMIC).

8. Circuit arrangement according to one of Claims 1 to 7, in which the AC voltage (V AC) is a square-wave voltage consisting of voltage pulses with a second polarity with respect to the reference-earth potential (P).

9. Use of the circuit arrangement according to one of Claims 1 to 8 in a mobile radio set, a ringing signal transmitter supply voltage (V_{clk}) produced in the mobile radio set being used as the AC voltage (V AC).

## Revendications

1. Circuit de production d'une tension (V-) de sortie, ayant une première polarité par rapport à un potentiel (P) de référence, dans un appareil électronique alimenté par une tension (V+) de fonctionnement ayant une seconde polarité par rapport au potentiel (P) de référence, dans lequel
a) il est couplé entre une première borne (D) une section de charge d'un transistor (T) et une première borne (E1) d'entrée du circuit une bobine (L),
b) une deuxième borne (S) de la section de charge du transistor (T) est couplée à un potentiel (P) de référence fixe,
c) il peut être appliqué à la première borne (E1) d'entrée du circuit la tension (V+) de fonctionnement,
d) une borne (G) de commande du transistor (T) est couplée à une deuxième borne (E2) d'entrée du circuit sur laquelle peut être appliquée une tension (V~) alternative,
e) entre la première bome (D) de la section de charge du transistor (T) et une cathode (K1) d'une première diode (D1) est couplé un premier condensateur (C1),
f) la cathode (K1) de la première diode (D1) est couplée à une anode (A2) d'une deuxième diode (D2),
g) une cathode (K2) de la deuxième diode (D2) est couplée au potentiel (P) de référence fixe,
h) entre le potentiel (P) de référence fixe et une anode (A1) de la première diode (D1), est couplé un deuxième condensateur (C2) et
h) l'anode (A1) de la première diode (D1) est reliée à une borne (A) de sortie du circuit ayant la tension (V-) de sortie.

2. Circuit suivant la revendication 1, dans lequel il est couplé entre la borne (A) de sortie du circuit et la ligne (E2-G) de commande du transistor (T) une résistance (R3) électrique.

3. Circuit suivant la revendication 1 ou 2, dans lequel il est raccordé entre la première borne (E1) d'entrée du circuit et le potentiel (P) de référence fixe un troisième condensateur (C3).

4. Circuit suivant l'une des revendications 1 à 3, dans lequel il est monté avant la borne (G) de commande du transistor (T) une résistance (R1) de limitation du courant.

5. Circuit suivant l'une des revendications 1 à 4, dans lequel il est raccordé entre la deuxième borne (E2) d'entrée du circuit et le potentiel (P) de référence fixe une autre résistance (R2) électrique.

6. Circuit suivant l'une des revendications 1 à 5, dans lequel le transistor (T), la première et la deuxième diode (D1, D2) sont intégrés sur une puce (MMIC) MMIC unique.

7. Circuit suivant la revendication 2 ou suivant la revendication 2 et l'une des revendications 3 à 6, dans lequel le transistor (T), la première et la deuxième diode (D1, D2) et la résistance (R3) électrique sont intégrés sur une puce (MMIC) MMIC unique.

8. Circuit suivant l'une des revendications 1 à 7, dans lequel la tension (V~) alternative est une tension rectangulaire constituée d'impulsions de tension ayant une seconde polarité par rapport au potentiel (P) de référence.

9. Utilisation du circuit suivant l'une des revendications 1 à 8, dans un appareil de téléphonie mobile, en utilisant comme tension (V~) alternative une tension (V_{clk}) d'alimentation donnant un signal d'appel qui est produite dans l'appareil de téléphonie mobile.
